# EUROPÄISCHE PATENTSCHRIFT

(11) **EP 1 602 456 B1**
(45) Veröffentlichungstag und Bekanntmachung des Hinweises auf die Patenterteilung: **07.07.2010**
(21) Anmeldenummer: 05011664.9
(22) Anmeldetag: 31.05.2005
(51) Int. Cl.: B25J 9/16

(54) **Verfahren und Vorrichtung zum Steuern von Handhabungsgeräten**
Method and device for controlling manipulators
Procédé et dispositif de commande de manipulateurs

(30) Priorität: 02.06.2004 DE 102004026813
(43) Veröffentlichungstag der Anmeldung: 07.12.2005
(73) Patentinhaber: KUKA Roboter GmbH, 86165 Augsburg (DE)
(72) Erfinder: Bischoff, Rainer, 86163 Augsburg (DE)
(74) Vertreter: Lempert, Jost

(56) Entgegenhaltungen:
- EP-A- 0 511 396
- EP-A- 1 090 722
- US-A- 4 372 721
- ANANTHANARAYANAN S P ET AL: "Identification of kinematic parameters of multiple closed chain robotic manipulators working in coordination" PROCEEDINGS OF THE INTERNATIONAL CONFERENCE ON ROBOTICS AND AUTOMATION NICE, MAY 12 - 14, 1992, LOS ALAMITOS, IEEE COMP. SOC. PRESS, US, Bd. VOL. 3 CONF. 8, 12. Mai 1992 (1992-05-12), Seiten 358-363, XP010027935 ISBN: 0-8186-2720-4
- BONITZ R G ET AL: "CALIBRATING A MULTI-MANIPULATOR ROBOTIC SYSTEM" IEEE ROBOTICS & AUTOMATION MAGAZINE, IEEE SERVICE CENTER, PISCATAWAY, NJ, US, Bd. 4, Nr. 1, März 1997 (1997-03), Seiten 18-22, XP000688537 ISSN: 1070-9932
- YALOU HUANG ET AL: "Calibration of two cooperative manipulators via pseudo-closed-loop method" SYSTEMS, MAN AND CYBERNETICS, 1996., IEEE INTERNATIONAL CONFERENCE ON BEIJING, CHINA 14-17 OCT. 1996, NEW YORK, NY, USA,IEEE, US, Bd. 2, 14. Oktober 1996 (1996-10-14), Seiten 1465-1470, XP010207023 ISBN: 0-7803-3280-6
- KOSUGE K ET AL: "Calibration of coordinate system for decentralized coordinated motion control of multiple manipulators" ROBOTICS AND AUTOMATION, 1998. PROCEEDINGS. 1998 IEEE INTERNATIONAL CONFERENCE ON LEUVEN, BELGIUM 16-20 MAY 1998, NEW YORK, NY, USA,IEEE, US, Bd. 4, 16. Mai 1998 (1998-05-16), Seiten 3297-3302, XP010281439 ISBN: 0-7803-4300-X

## Beschreibung

Die Erfindung betrifft ein Verfahren zum Steuern einer Mehrzahl von Handhabungsgeräten, wie Mehrachs-Industrierobotern nach den Oberbegriffen der Ansprüche 1 und 2. Weiterhin betrifft die Erfindung eine Vorrichtung zum Verbessern von Genauigkeitseigenschaften von Handhabungsgeräten.

Von den genannten mehreren Handhabungsgeräten soll wenigstens eines als Referenz-Handhabungsgerät und wenigstens ein anderes als Kopier-Handhabungsgerät fungieren, das die Positionierungs- und Bahnfahreigenschaften des Referenz-Handhabungsgeräts übernehmen soll. Zur Verbesserung der Positioniergenauigkeit von Handhabungsgeräten, insbesondere von Mehrachs-Industrierobotern, gingen in der Vergangenheit Bestrebungen dahin, immer genauere Modelle der Handhabungsgeräte zu erstellen. Die Parameter derartiger Modelle werden dabei im Zuge eines Einmessvorgangs bestimmt, der normalerweise einmalig beim Hersteller des Handhabungsgeräts durchgeführt wird. Typischerweise wird hierbei an einem Handflansch des Roboters ein Hilfsmittel befestigt, das ein genaues Bestimmen der Lage, d.h. einer Position und Orientierung, üblicherweise und auch im Folgenden zusammenfassend als "Pose" bezeichnet, des Flansches im Raum ermöglicht. Beispielsweise kommen hierbei Referenzplatten mit bekannten, von einem Kamera- oder Laser-Tracking-System erfassbaren Merkmalen zum Einsatz. Alternativ werden andere, dem Fachmann bekannte Messsysteme, wie Faden-Messsysteme oder dergleichen, eingesetzt.

Aufgrund regelmäßig vorhandener Ungenauigkeiten, z.B. Elastizitäten von Getrieben und Strukturelementen des Roboters sowie deren mangelnder Maßhaltigkeit, liefert die vorstehend beschriebene, hochgenaue externe Lagemessung des Flansches einen anderen Wert, als eine parallel durchgeführte interne Messung von Stellungswerten des Handhabungsgeräts, beispielsweise über in dessen Gelenken integrierte Winkelgeber, die zur Posenermittlung mit einer anschließenden Modellrechnung, der sogenannten Vorwärtstransformation, verbunden sein kann. Die aus der ermittelten Lagedifferenz abgeleiteten Abweichungen jeweils an verschiedenen Orten des Arbeitsraumes eines Handhabungsgeräts werden anschließend dazu verwendet, ein sogenanntes "absolutgenaues Robotermodell" zu bestimmen, das wesentlich genauer als ein theoretisches "Standardmodell" des Roboters ist. Auf diese Weise lässt sich die absolute Positioniergenauigkeit eines Mehrachs-Industrieroboters von einigen Millimetern bei Verwendung des Standardmodells auf weniger als einen Millimeter bei Verwendung eines absolutgenauen Robotermodells verbessern.

In der veröffentlichen Patentanmeldung EP-A-1 604 789 derselben Anmelderin ("Verfahren und Vorrichtung zum Verbessern der Positioniergenauigkeit eines Handhabungsgeräts") sind Verfahren und Vorrichtungen zum Bestimmen der vorstehend beschriebenen Absolutgenauigkeit eines Mehrachs-Industrieroboters beschrieben, wobei insbesondere das Handhabungsgerät nach Maßgabe eines externen Messsystems zur Minimierung von Abweichungen in eine im Wesentlichen einer vorgegebenen Pose entsprechende Endpose verfahren wird und anschließend interne Stellungswerte des Handhabungsgeräts in der Endpose für eine Parametrisierung des absolutgenauen Modells verwendet werden. Auf diese Weise lässt sich eine Positioniergenauigkeit von Handhabungsgeräten auf der Grundlage absolutgenauer Steuerungsmodelle für das Handhabungsgerät verbessern, wobei insbesondere das Austauschen eines beliebigen Roboters in eine Roboterzelle (Arbeitszelle) durch einen anderen Roboter ermöglicht wird.

Ein wichtiger Einsatzbereich derartiger absolutgenauer Roboter ist die Kooperation mehrerer Roboter. Im Zuge einer solchen Kooperation arbeiten zwei oder mehrere Roboter zeitgleich an einem Werkstück, wobei z.B. ein Roboter das Werkstück hält und bewegt, während der andere Roboter Schweißarbeiten an dem Werkstück vornimmt. Alternativ können beispielsweise zwei Roboter gleichzeitig ein Objekt transportieren, oder ein Roboter übergibt einem anderen Roboter ein Objekt während einer Bewegung. Da prinzipiell davon ausgegangen wird, dass ein absolutgenau vermessener Roboter zu jedem Punkt seines Arbeitsraumes mit einer tolerierbaren Genauigkeit erreichen kann, wird in der Praxis regelmäßig gefolgert, dass eine Vermessung eines Basis-Koordinatensystems für einen Roboter in Bezug auf einen anderen Roboter ausreicht, um eine gewünschte, kooperative Bewegung zu ermöglichen.

Es hat sich jedoch gezeigt, dass selbst die absolutgenaue Vermessung von Robotern in der Regel nicht ausreicht, um den problemlosen Einsatz mehrerer kooperierender Roboter zu ermöglichen: Kleinste Abweichungen von den geforderten Toleranzen bedingen beispielsweise große Kräfte in einem von zwei Robotern getragenen Werkstück, den Werkzeugen und an den Robotern selbst, was zu schwerwiegenden Schädigungen führen kann. Ein möglicher Ansatz besteht darin, Roboter-, Werkzeug- und Bauteil-Toleranzen durch eine nachgiebige Ankopplung der Werkzeuge auszugleichen, was jedoch aus Kostengründen nicht realisierbar ist. Weiterhin gilt, dass aufgrund der immer komplexer werdenden Einsatzfälle kooperierender Roboter durch Teachen (Online-Programmieren) oder Nachteachen eines offline erstellen Roboter-Steuerprogramms ein gewünschter, exakter Programmablauf nicht auf wirtschaftliche Art und Weise erreichbar ist.

Die Druckschrift S.P. Ananthanarayanan et al. "Identification of Kinematic Parameters of Multiple Closed Chain Robotic Manipulators Working in Coordination", Proceedings of the International Conference on Robotics and Automation Nice, May 12-14, 1992, Los Alamitos, IEEE Comp. Soc. Press, US, Bd. Vol. 3 Conf. 8, 12. Mai 1992 (1992-05-12), Seiten 358-363, ISBN: 0-8186-2720-4 beschreibt ein kinematisches Kalibrierungsverfahren für Manipulatoren mit geschlossenen kinematischen Ketten, die koordiniert in einer Mehrroboterumgebung arbeiten. Mittels des genannten Verfahrens wird jeder individuelle Roboter als solcher kalibriert. Zur Kalibrierung wird eine mehrdimensionale numerische Prozedur zum Bestimmen einer Wurzel eingesetzt, die sich besser verhält als traditionell verwendete Newton-Raphson-Technik. Eine Nutzung der für einen Roboter gewonnenen Daten zur Kalibrierung eines anderen Roboters erfolgt nicht, da die Roboter individuell kalibriert werden.

Der Erfindung liegt die Aufgabe zugrunde, unter Vermeidung der vorstehend aufgeführten Nachteile einen effizienten Betrieb kooperierender Handhabungsgeräte, wie Mehrachs-Industrieroboter, zu ermöglichen.

Diese Aufgabe wird erfindungsgemäß durch Verfahren zum Steuern einer Mehrzahl von Handhabungsgeräten, wie Mehrachs-Industrierobotern, mit den kennzeichnenden Merkmalen des Anspruchs 1 bzw. des Anspruchs 2 gelöst.

Weiterhin wird die genannte Aufgabe gelöst durch erfindungsgemäße Vorrichtungen zum Verbessern von Genauigkeitseigenschaften von Handhabungsgeräten, wie Mehrachs-Industrierobotern, mit den kennzeichnenden Merkmalen des Anspruchs 15 oder des Anspruchs 17.

Der Kerngedanke der vorliegenden Erfindung ist es, dass ein (externes) Messsystem die relative Lage von Handhabungsgeräten zueinander bestimmt und dass anschließend die Modelldaten des einen Handhabungsgeräts so angepasst werden, dass sowohl eine Kompensation seiner eigenen Fehler als auch derjenigen eines anderen Handhabungsgeräts erreicht wird. Diese Vorgehensweise beinhaltet ein Kopieren von Genauigkeitseigenschaften eines Roboters auf zumindest einen oder alle weiteren vorhandenen Roboter beschreiben. Sie unterscheidet sich damit grundsätzlich von heutzutage praktizierten, vorbekannten Vorgehensweisen, bei denen alle beteiligten Roboter durch individuelles, absolutgenaues Vermessen nur ungefähr "gleich gemacht" werden.

Gemäß der Erfindung werden die Genauigkeitseigenschaften eines Roboters auf einen anderen Roboter kopiert oder transferiert. Dies kann durch ein iteratives Vorgehen zur Ermittlung eines kinematischen Fehlermodells geschehen. Der Referenzroboter benötigt kein Fehlermodell, da der Kopierroboter mit seinem Fehlermodell sowohl die Fehler des Referenzroboters als auch seine eigenen Fehler kompensiert. Die Erfindung beinhaltet so die Kompensation von Fehlern bzw. das bewusste Aufschalten von kinematischen Ungenauigkeiten zur Abbildung (zum Kopieren) der Genauigkeitseigenschaften des Referenzroboters, d.h. es sind mindestens immer zwei Roboter involviert und es ist durchaus erlaubt, die kinematischen Fehler zu vergrößern, wenn dies eben dazu dient, die Positionierungseigenschaften eines anderen Roboters zu kopieren bzw. zu klonen. Referenz- und Kopierroboter fahren an die gleiche Stelle (Soll oder Ist) im Raum, um die Genauigkeitseigenschaften einfach kopieren zu können.

Mittels der Erfindung können beispielsweise mehrere in einer Kette stehende Roboter auf ein Weltkoordinatensystem kalibrieren, indem der erste Roboter als absolutgenau vermessener Roboter auf das Weltkoordinatensystem kalibriert wird, der zweite dann die Eigenschaften des ersten Roboters übernimmt, der dritte dann die Eigenschaften des zweiten usw.. Damit ist gewährleistet, dass auch weit vom Ursprung eines Weltkoordinatensystem entfernt stehende Roboter auf dieses kalibriert werden können mit den sich daraus ergebenen Vorteilen der Offline-Programmierbarkeit der gesamten Robotergruppe.

Nach einer ersten Ausgestaltung des erfindungsgemäßen Verfahrens ist zum Kopieren von Genauigkeitseigenschaften vorgesehen, dass durch das Kopier-Handhabungsgerät die bestimmten ersten Soll-Posen des Referenz-Handhabungsgeräts angefahren werden. Um alternativ eine noch verbesserte Übereinstimmung der Genauigkeitseigenschaften zu erzielen, sieht eine weitere Ausgestaltung des erfindungsgemäßen Verfahrens vor, dass durch das Kopier-Handhabungsgerät die bestimmten, ersten Ist-Posen des Referenz-Handhabungsgeräts angefahren werden. Dabei kann insbesondere vorgesehen sein, dass das Verfahren des Kopier-Handhabungsgeräts bei Steuerung durch das externe Messsystem erfolgt.

Eine bevorzugte Weiterbildung des erfindungsgemäßen Verfahrens ermöglicht es, dass der Betrieb des Referenz-Handhabungsgeräts und des Kopier-Handhabungsgeräts im Wesentlichen gleichzeitig erfolgen, wobei dem Kopier-Handhabungsgerät die Soll- und/oder Ist-Posen des Referenz-Handhabungsgeräts über eine geeignet ausgebildete Verbindung, insbesondere eine Datenverbindung, übermittelt werden, so dass eine zur Durchführung des erfindungsgemäßen Verfahrens erforderliche Zeit minimierbar ist. Dabei können sich das Kopier-Handhabungsgerät und das Referenz-Handhabungsgerät in getrennten, jedoch identischen Arbeitszellen befinden bzw. in diesen betrieben werden, um systematische Einflüsse auf die Genauigkeitseigenschaften weitgehend auszuschließen.

Es ist jedoch nach einer Weiterbildung des erfindungsgemäßen Verfahrens auch möglich, die zu vermessenden Roboter in ihrer tatsächlichen Arbeitsumgebung und -konstellation zu vermessen, in der sie später auch zusammenarbeiten sollen.

Hierzu ist vorgesehen, dass das Kopier-Handhabungsgerät das externe Messsystem trägt, so dass Letzteres von dem Kopier-Handhabungsgerät mitbewegt wird, wobei vorzugsweise zwischen dem Referenz-Handhabungsgerät und dem Kopier-Handhabungsgerät über das externe Messsystem, z.B. einen Kraft-Momenten-Sensor, eine mechanische Zwangskopplung erfolgt. Alternativ kann die Posenbestimmung durch das externe Messsystem auch optisch erfolgen.

Insbesondere wenn das Referenz-Handhabungsgerät und das Kopier-Handhabungsgerät zeitlich versetzt betrieben werden, z.B. nacheinander in ein und derselben Arbeitszelle an ein und derselben Steuerungseinrichtung, werden dem Kopierhandhabungsgerät die Soll- und/oder Ist-Posen des Referenz-Handhabungsgerät in gespeicherter Form, beispielsweise auf einem wechselbaren Datenträger, übermittelt, so dass eine weitere bevorzugte Ausgestaltung des erfindungsgemäßen Verfahrens vorsieht, dass die ersten Soll- und Ist-Posen des Referenz-Handhabungsgeräts nach ihrer Bestimmung gespeichert werden.

Für spezielle Anwendungen, beispielsweise um ein "Fließband" zu emulieren oder zum Kopieren von Genauigkeitseigenschaften zwischen einer größeren Anzahl von Handhabungsgeräten, ist erfindungsgemäß vorgesehen, dass zunächst ein erstes Handhabungsgerät als Referenz-Handhabungsgerät und ein zweites Handhabungsgerät als Kopier-Handhabungsgerät ausgewählt wird, dass anschließend das zweite Handhabungsgerät als Referenz-Handhabungsgerät und ein weiteres Handhabungsgerät als Kopier-Handhabungsgerät fungiert usw.

Entsprechende Weiterbildungen einer erfindungsgemäßen Vorrichtung sehen vor, dass wenigstens ein externes Messsystem stationär und in Wirkverbindung mit einem Arbeitsbereich eines Handhabungsgeräts angeordnet ist.

Das externe Messsystem ist nach einer äußerst bevorzugten Weiterbildung der erfindungsgemäßen Vorrichtung als optisch messendes Messsystem ausgebildet, wobei das optische Messsystem zum Bestimmen sämtlicher Freiheitsgrade einer Pose der Handhabungsgeräte ausgebildet sein kann, beispielsweise im Zuge einer Ausbildung als Stereo-Bildverarbeitungssystem. Somit ist auf an sich bekannte, schnelle und hochgenaue Weise eine Ist-Posen-Bestimmung an den Handhabungsgeräten vornehmbar.

Die Handhabungsgeräte können sich je nach Art der durchzuführenden Vermessung in gemeinsamen und/oder getrennten Arbeitszellen befinden, wobei insbesondere bei getrennten Arbeitszellen nach einer bevorzugten Weiterbildung der erfindungsgemäßen Vorrichtung Übertragungsmittel zur Datenübertragung zwischen Handhabungsgeräten, insbesondere zum Übertragen von Soll- und/oder Ist-Posen, vorgesehen sind.

Des Weiteren kann eine erfindungsgemäße Vorrichtung Speichermittel zumindest für Soll- und/oder Ist-Posen eines Handhabungsgeräts aufweisen, wie vorstehend bereits erwähnt wurde.

Weitere Vorteile und Eigenschaften der Erfindung ergeben sich aus der nachfolgenden Beschreibung von Ausführungsbeispielen anhand der Zeichnung. Es zeigt:
- Fig. 1: schematisch zwei Handhabungsgeräte in Form von Mehrachs-Industrierobotern mit Steuerungseinrich- tungen und externen Messsystemen;
- Fig. 2: ein Blockschaltbild einer erfindungsgemäßen Vor- richtung;
- Fig. 3a: schematisch eine an einem Handflansch des Robo- ters angeordnete Messplatte;
- Fig. 3b: schematisch eine im Zuge des erfindungsgemäßen Verfahren durchgeführte Bestimmung von Abweichun- gen;
- Fig. 4: ein Ablaufdiagramm einer ersten Variante des er- findungsgemäßen Verfahrens; und
- Fig. 5: zwei Handhabungsgeräte, von denen eines ein mit- bewegtes externes Messsystem trägt;
- Fig. 6: ein Ablaufdiagramm einer zweiten Variante des er- findungsgemäßen Verfahrens.

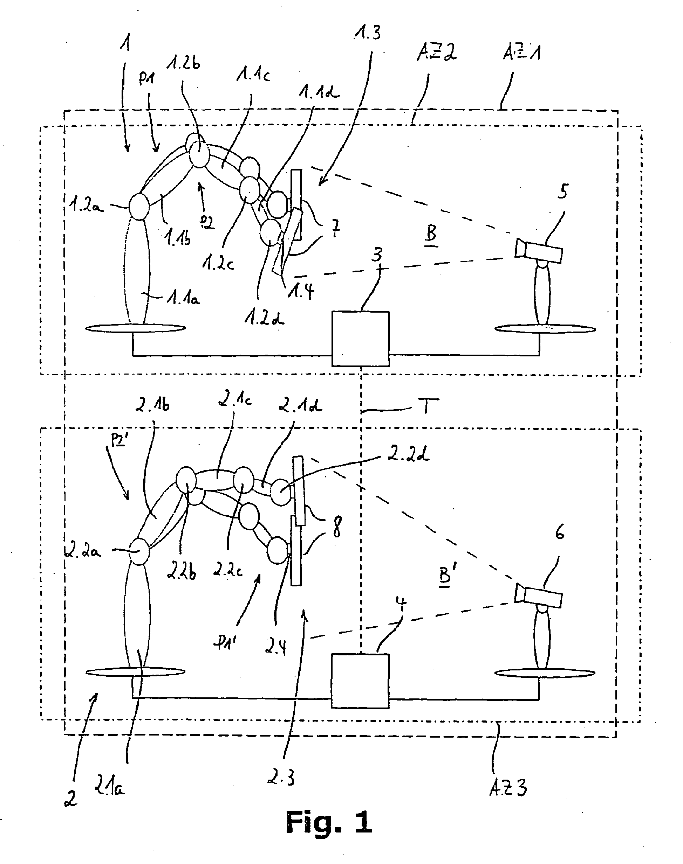

Die Fig. 1 zeigt schematisch zwei Handhabungsgeräte in Form von Mehrachs-Industrierobotern 1, 2 mit jeweils einer zugeordneten Steuerungseinrichtung 3, 4. Weiterhin zeigt die Fig. 1 zwei mit jeweils einem Roboter 1, 2 zusammenwirkende externe Messsysteme 5, 6, hier in Form optischer Kamerasysteme, die wie der betreffende Roboter 1, 2 mit der jeweiligen Steuerungseinrichtung 3, 4 in Wirkverbindung stehen.

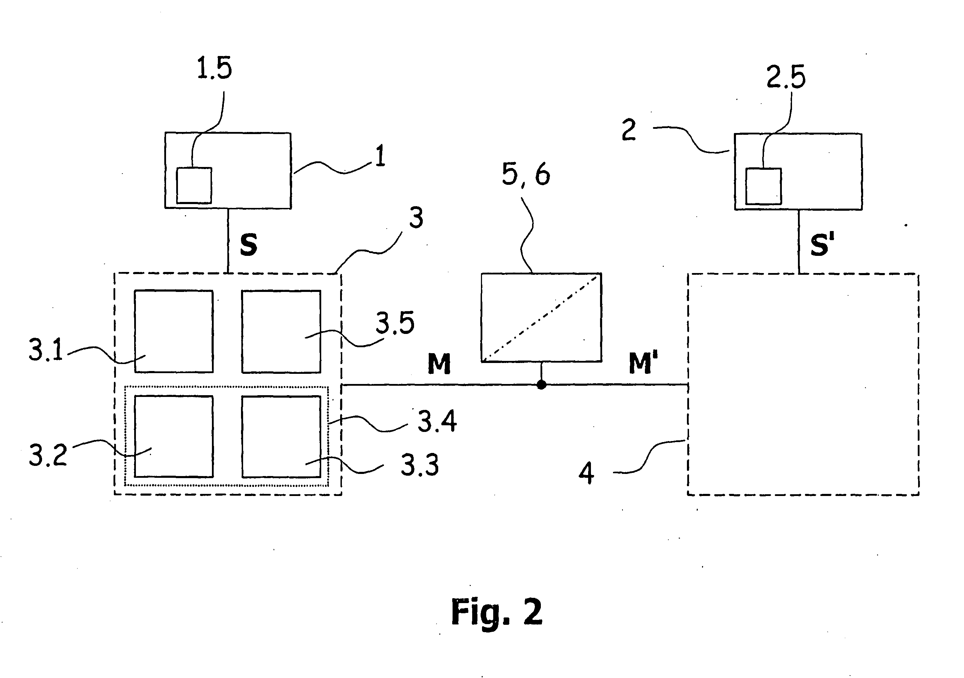

Die Steuerungseinrichtungen 3, 4 können steuerungstechnisch miteinander verbunden sein (in der Fig. 1 durch eine gestrichelte Verbindungslinie T dargestellt) oder sogar eine technische Einheit bilden; desgleichen gilt für die externen Messsysteme 5, 6 (vgl. Fig. 2).

Die letztgenannte Ausgestaltung mit einem gemeinsamen externen Messsystem 5, 6 und/oder einer gemeinsamen Steuerungseinrichtung 3, 4 ist insbesondere dann relevant, wenn sich die beiden Handhabungsgeräte 1, 2 in einer gemeinsamen Arbeitszelle AZ1 befinden, wie in der Fig. 1 anhand des gestrichelten Rechtecks symbolisiert. Alternativ können die beiden Handhabungsgeräte 1, 2 jedoch auch in getrennten Arbeitszellen AZ2, AZ3 angeordnet sein, wie in der Fig. 1 durch die beiden strichpunktierten Rechtecke dargestellt ist. Bei der Trennung der Arbeitszellen AZ2, AZ3 kann es sich um eine räumliche und/oder eine zeitliche Trennung handeln, d.h. die Roboter 1, 2 können sich gleichzeitig oder zeitversetzt in räumlich getrennten Arbeitszellen befinden, oder nacheinander (sequentiell) in ein und derselben Arbeitszelle betrieben werden. Insbesondere in letzterem Fall sind die Handhabungsgeräte 1, 2 auch an ein und derselben Steuerungseinrichtung 3 bzw. 4 betreibbar.

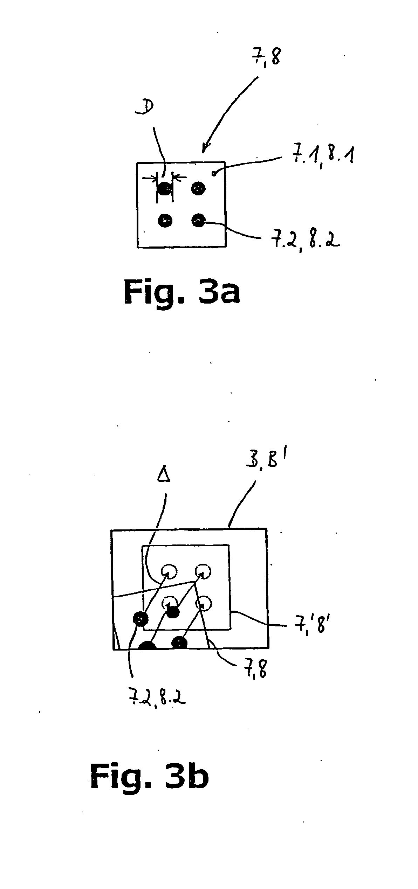

Die Roboter 1, 2 besitzen jeweils eine Anzahl - in der gewählten Darstellung nur schematisch gezeigten - Robotergliedern 1.1a-d bzw. 2.1a-d, die über entsprechende Gelenke 1.2a-d bzw. 2.2a-d verbunden sind. An einem distalen Ende 1.3, 2.3 eines jeweils aus den genannten Robotergliedern gebildeten Roboterarms ist jeweils ein Handflansch 1.4, 2.4 angeordnet, an dem eine Messplatte 7, 8 (vgl. Fig. 3a) befestigt ist. Wie weiter unten in der Fig. 2 dargestellt, weisen die Roboter 1, 2 außerdem jeweils ein internes Messsystem 1.5, 2.5 für Stellungswerte des Roboters 1, 2 auf, beispielsweise in Form von in den Roboter-Gelenken 1.2a-d, 2.2a-d enthaltenen Winkelmessern.

Die Roboter 1, 2 sind in der Fig. 1 jeweils in zwei unterschiedlichen Posen P1, P2 bzw. P1', P2' dargestellt: Die Pose P1, P1' (durchgezogene Linien in Fig. 1) bezeichnet eine tatsächliche Pose des Roboters 1 bzw. 2, die erfindungsgemäß durch das externe Messsystem 5 bzw. 6 bestimmbar ist. Die Pose P2, P2' (punktierte Linien in Fig. 1) bezeichnet diejenige Pose, in der der jeweilige Roboter 1, 2 aufgrund des internen Messsystems 1.5, 2.5, beispielsweise der in seinen Gelenken 1.2a-d, 2.2a-d vorhandenen Winkelmesser, zu sein glaubt.

Die externen Messsysteme 5, 6 weisen zum Vermessen der Posen P1, P1' der Roboter 1, 2 jeweils einen Messbereich B, B' auf, der in der Fig. 1 durch seine Bereichsgrenzen (gestrichelte Linien) definiert ist. Innerhalb der Bereiche B, B' kann das externe Messsystem 5, 6 eine Pose P1, P1' des Roboters 1, 2 über die Lage der Messplatte 7, 8 bestimmen.

Gemäß der Fig. 1 sind durch das externe Messsystem 5, 6 Posen-Abweichungen des jeweiligen Roboters 1, 2 zwischen der gedachten Soll-Pose P2, P2' und der tatsächlich angefahrenen Ist-Pose P1, P1' bestimmbar, die insbesondere nach einem in der veröffentlichen Patentanmeldung EP-A-1 604 789 desselben Anmelders beschriebenen Verfahren zum Bestimmen eines absolutgenauen Parameter-Modells für den jeweiligen Roboter 1, 2 nutzbar sind.

Die Fig. 2 zeigt anhand eines Blockschaltbildes das erfindungsgemäße Zusammenwirken der Roboter 1, 2 und der mit ihnen verbundenen Steuerungseinrichtungen 3, 4 mit den externen Messsystemen 5, 6, die im Ausführungsbeispiel der Fig. 2 als technische Einheit dargestellt sind. Die Steuerungseinrichtungen 3, 4 sind mit dem jeweiligen Roboter 1, 2, insbesondere zur Bewegungssteuerung desselben durch Steuersignale S, S' verbunden. Weiterhin besteht jeweils eine Verbindung von der Steuerungseinrichtung 3, 4 zu dem externen Messsystem 5, 6, über die insbesondere Posen-Messwerte M, M' von den externen Messsystemen 5, 6 an die Steuerungseinrichtungen 3, 4 übermittelbar sind, in umgekehrter Richtung jedoch auch Steuerbefehle zum Durchführen eines Messvorgangs durch das externe Messsystem 5, 6 oder dergleichen.

Die im Wesentlichen identisch aufgebauten Steuerungseinrichtungen 3, 4 von denen in der Fig. 2 aufgrund der Übersichtlichkeit nur eine 3 detailliert dargestellt ist, umfassen zumindest Speichermittel 3.1, bei denen es sich insbesondere um nichtflüchtige Massenspeicher handeln kann.

Weiterhin beinhalten die Steuerungseinrichtungen 3, 4 jeweils eine Vergleichseinrichtung 3.2 und eine Rechen- oder Modellbildungs-Einrichtung 3.3, die nach dem gezeigten Ausführungsbeispiel als hardwaretechnische Einheit in Form eines Mikroprozessors 3.4 vorliegen (punktierte Linien in Fig. 2). Außerdem dargestellt sind Steuermittel 3.5, wobei auch Letztere mit den Vergleichsmitteln 3.2 und der Rechen- oder Modellbildungs-Einrichtung 3.3 als Einheit ausgebildet sein können (nicht gezeigt).

Die Funktionen der einzelnen Bestandteile der Steuerungseinrichtungen 3, 4 im Rahmen der vorliegenden Erfindung werden weiter unten noch detailliert erläutert.

Die Fig. 3a zeigt lediglich beispielhaft und schematisch eine Vorderansicht der Messplatte 7, 8 der Fig. 1, etwa aus der Blickrichtung des externen Messsystems 5, 6. Die Messplatte 7, 8 ist beim gezeigten Ausführungsbeispiel quadratisch ausgebildet und weist auf ihrer Vorderseite 7.1, 8.1 eine Anzahl von speziell kreisförmigen Markierungen 7.2, 8.2 auf, die wie die Augen eines Würfels zur Darstellung der Zahl Vier im Quadrat angeordnet sind. Die Markierungen 7.2, 8.2 besitzen alle denselben Durchmesser D. Auf diese Weise lässt sich über eine durch das externe Messsystem 5, 6 (vgl. Fig. 1) ermittelte absolute Lage der Messplatte 7, 8 aufgrund absoluter Positionen der Markierungen 7.2, 8.2 bzw. scheinbarer Veränderungen des Durchmessers D von Markierung zu Markierung eine Pose P1, P1' des Roboters 1, 2 bestimmen. Andere Verfahren zur Bestimmung der 6D-Pose einer Messplatte sind möglich.

Dies ist zum Teil in der Fig. 3b schematisch dargestellt: Die Rechtecke in Fig. 3b bezeichnen jeweils den Messbereich B, B' des externen Messsystems 5, 6 (vgl. Fig. 1). Dabei ist in der Fig. 3b ein durch die Kamera eines der externen Messsysteme 5, 6 aufgenommenes Bild dargestellt. Neben der realen Messplatte 7, 8 ist in Fig. 3b noch eine weitere, virtuelle Messplatte 7', 8' (punktiert) eingezeichnet, die eine vorgegebene Pose des Roboters 1, 2 symbolisiert, d.h. eine Pose, in die der Roboter 1, 2 bzw. die Messplatte 7, 8 nach Maßgabe der Steuermittel 3.5 in der Steuerungseinrichtung 3 (Fig. 2) bewegt werden soll.

Die Pfeile in der Fig. 3b symbolisieren Abweichungen Δ der tatsächlichen Pose P1, P1' (Messplatte 7, 8) von der vorgegebenen Pose (Messplatte 7', 8'), wie sie beim gezeigten Ausführungsbeispiel durch die Vergleichsmittel 3.2 der Steuerungseinrichtung 3 ermittelt werden, nachdem das externe Messsystem 5, 6 alle Messdaten M, M' an die Steuerungseinrichtung 3, 4 übertragen hat, wie in der Fig. 2 dargestellt. Die Markierungen 7.2, 8.2 auf der Messplatte 7, 8 sind in der Fig. 3b insbesondere mit unterschiedlichen Durchmessern dargestellt, so dass durch eine geeignete Bildverarbeitung der Messdaten M, M' aus dem Messbereich B, B' des externen Messsystems 5, 6, beispielsweise in den hierzu softwaretechnisch eingerichteten Vergleichsmitteln 3.2 der Steuerungseinrichtung 3, tatsächliche Abweichungen Δ in allen Freiheitsgraden (hier: Sechs) des Roboters 1, 2 bestimmbar sind.

Wie in der bereits erwähnten, parallelen Patentanmeldung desselben Anmelders beschrieben, können die so bestimmten Abweichungen Δ anschließend durch die Steuermittel 3.5 der Steuerungseinrichtung 3 dazu verwendet werden, den Roboter 1, 2 über geeignete Steuersignale S, S' bis in eine Endpose zu verfahren, in der die reale Messplatte 7, 8 und die virtuelle Messplatte 7', 8' bzw. deren Bilder bis auf eine durch die Steuerungseinrichtung 3 vorgegebenen Abweichungstoleranz zur Deckung kommen.

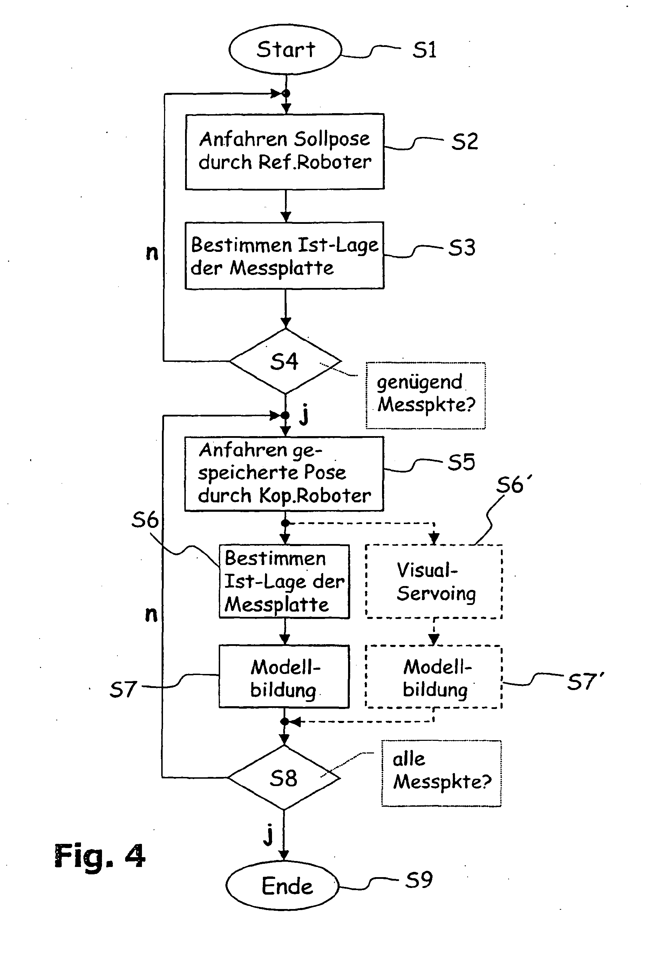

Im Folgenden wird zunächst anhand der Fig. 4 der Ablauf eines ersten erfindungsgemäßen Verfahrens zum Steuern einer Mehrzahl von Handhabungsgeräten, insbesondere zum Kopieren von Genauigkeitseigenschaften eines Roboters beschrieben:

Nach Start des Verfahrens in Schritt S1 fährt der in Fig. 1 dargestellte erste Roboter 1, der erfindungsgemäß als Referenzroboter dient, in einem einleitenden Schritt S2 mit seiner Messplatte 7 eine durch seine Steuerungseinrichtung 3 vorgegebene Soll-Pose P2 innerhalb seines Arbeitsraumes an und speichert diese in den Speichermitteln 3.1. Die anzufahrende Pose kann im Zuge eines Vermessungsvorgangs von einem Posengenerator (nicht gezeigt) vorgegeben werden oder sich aus denjenigen Steuerprogrammen ableiten, die der Roboter 1 während seines eigentlichen Betriebs in der Steuerungseinrichtung 3 abzuarbeiten hat. In einem anschließenden Schritt S3 wird die Lage der Messplatte 7 im Raum über das externe Messsystem 5 bestimmt. Die so ermittelnde Ist-Pose der Messplatte 7 bzw. des Roboters 1 im Raum wird ebenfalls in den Speichermitteln 3.1 gespeichert. Danach erfolgt in Schritt S4 eine Abfrage dahingehend, ob genügend Messpunkte (-posen) angefahren wurden. Wird diese Abfrage bejaht (j), so wird das Verfahren mit Schritt S5 fortgesetzt. Anderenfalls (n) kehrt das Verfahren nach Schritt S2 zurück.

In Schritt S5 arbeitet der Roboter 2 gemäß Fig. 1, im Folgenden auch als Kopierroboter bezeichnet, eine Liste der vom Referenzroboter 1 gespeicherten Posen (Punkte) ab, indem seine Steuerungseinrichtung 4 zunächst die erste gespeicherte Soll-Pose des Referenzroboters anfährt (und anschließend im Verlauf weiterer Iteration jeden weiteren Punkt der Liste). Bei der durch den Kopierroboter 2 angefahrenen Pose wird anschließend in Schritt S6 mit Hilfe des externen Messsystems 6 wieder eine tatsächliche Pose (Ist-Pose) der Messplatte 8 bestimmt. Aus den sich bei den genannten Messungen in Schritt S3 und Schritt S6 analog der Fig. 3b ergebenden Abweichungen Δ (Fehlern) lässt sich in der Recheneinrichtung 3.3 der Steuerungseinrichtung 3, die demnach erfindungsgemäß als Modellbildungs-Einrichtung fungiert, bzw. entsprechenden Mitteln in der Steuerungseinrichtung 4 in Schritt S7 ein Parameter-Modell für den Kopierroboter 2 bestimmen. Dieses Parameter-Modell führt bei späterer Anwendung dazu, dass der Kopierroboter 2 nicht eine von seiner Steuerungseinrichtung 4 ursprünglich vorgegebene, sondern die durch den Referenzroboter 1 tatsächlich erreichte Pose P1 annimmt. Auf diese Weise kompensiert das genannte absolutgenaue Modell des Kopierroboters 2 simultan sowohl die eigenen Fehler als auch die Fehler des Referenzroboters 1. Damit verfährt der Kopierroboter 2 im späteren Betrieb genau an diejenigen Stellen (Posen), an die auch der Referenzroboter 1 fährt bzw. gefahren wäre.

Abschließend erfolgt gemäß der Fig. 4 in Schritt S8 eine Abfrage dahingehend, ob alle Messpunkte der Liste abgearbeitet wurden. Ist dies der Fall (j), endet das Verfahren in Schritt S9, andernfalls (n) wird das Verfahren mit Schritt S5 fortgesetzt.

Die Fig. 4 zeigt in gestrichelter Darstellung (Verfahrensschritte S6', S7') eine weitere, alternative Ausgestaltung des erfindungsgemäßen Verfahrens: Hierbei entsprechen zunächst die Verfahrensschritte S1-S5 den bereits vorstehend beschriebenen. Zu Beginn des Schritts S6' befindet sich der Kopierroboter 2 nun nominell, d.h. gemäß den internen Stellungswert-Kenntnissen seiner Steuerungseinrichtung 4 an der gleichen Position wie zuvor der Referenzroboter 1. Mit Hilfe eines lokalen Suchalgorithmus, vorzugsweise einem bildbasierten "Visual Servoing"-Verfahren gemäß der Fig. 3b, bei dem die Messplatte 8 des Kopierroboters 2 nach Maßgabe des externen Messsystems 6 zur Minimierung der Abweichungen Δ im Messbereich B' des externen Messsystems 6 verfahren wird, lässt sich der Kopierroboter 2 dergestalt im Raum positionieren, dass seine Pose im Wesentlichen exakt der mit dem externen Messsystem 5 ermittelten Ist-Pose des Referenz-Roboters 1 entspricht. Dabei entspricht beispielsweise die real vermessene Messplatte 7 des Referenzroboters 1 der in der Fig. 3b gezeigten virtuellen Messplatte 8' für den Kopierroboter 2.

Das vorstehend skizzierte Verfahren lässt sich in seinen Grundzügen auch bei einzelnen Handhabungsgeräten zum Erstellen absolutgenauer Parameter-Modelle verwenden, was in der bereits zitierten Parallelanmeldung derselben Anmelderin detailliert offenbart ist, so dass insoweit auf die dortige Offenbarung Bezug genommen wird.

Somit gilt für den nachfolgenden Verfahrensschritt S7', dass die durch den Kopierroboter 2 angefahrenen Raumpositionen nunmehr direkt über dessen eigenes, internes Messsystem 2.5 (Fig. 2) bestimmbar sind. Somit lässt sich analog zum vorstehend beschriebenen Verfahrensschritt S7 mit Hilfe eines zu bestimmenden absolutgenauen Robotermodells der Fehler gegenüber dem Referenzroboter 1 kompensieren. Eine Anwendung dieses Modells führt dann in Zukunft dazu, dass der Roboter 2 nicht eine von seiner Steuerungseinheit 4 ursprünglich vorgegebene Pose annimmt, sondern eine vom Roboter 1 tatsächlich erreichte Position, d.h. das (absolutgenaue) Parameter-Modell des Kopierroboters 2 kompensiert sowohl die eigenen Fehler als auch diejenigen des Referenzroboters 1 und wird dann im späteren Betrieb genau die Stellen anfahren, die auch der Referenzroboter 1 anfährt bzw. angefahren wäre.

Anschließend wird das Verfahren gemäß der zweiten Alternative mit dem bereits vorstehend erläuterten Verfahrensschritt S8 fortgesetzt.

Allgemein lässt sich zu den beiden vorstehend beschriebenen Verfahrensarten ausführen, dass der Kopierroboter 2 anstelle des Referenzroboters 1 in die gleiche Mess- oder Arbeitszelle gesetzt und zudem auch an der gleichen Steuerungseinrichtung 3, 4 wie der Referenzroboter 1 betrieben werden kann. Dies ist in der Fig. 1 anhand der (zeitlich) getrennten Arbeitszellen AZ2, AZ3 dargestellt. Alternativ kann sich der Kopierroboter 2 in einer parallel zur Mess- oder Arbeitszelle des Referenzroboters 1 aufgebauten identischen Zelle befinden (räumlich getrennte Zellen AZ2, AZ3 in Fig. 1) und bekommt die gespeicherten Positionen und Messdaten des Referenzroboters 1 über eine Datei und/oder eine geeignete Dätenverbindung, z.B. Ethernet oder dergleichen, mitgeteilt (gestrichelte vertikale Linie T zwischen den Steuerungseinrichtungen 3, 4 in Fig. 1).

Durch die andere Art der Messung bei der zweiten dargestellten Verfahrensvariante (lokaler Suchalgorithmus in Schritt S6') werden die hierbei gewonnenen Modell-Paramter im Vergleich mit der ersten Verfahrensvariante eine höhere Qualität aufweisen, da beim Messvorgang tatsächlich die Ist-Posen der Roboter 1, 2 verglichen bzw. gleichgesetzt werden und nicht nur die regelmäßig durch Toleranzen der Handhabungsgeräte beeinflussten Soll-Posen.

Die vorstehend beschriebenen Verfahrensarten eignen sich insbesondere für das Vermessen eines einzelnen Roboters 2, z.B. beim Hersteller. Der zu vermessende Roboter 2 steht dabei an der gleichen Stelle wie der Referenzroboter 1 und verwendet idealerweise auch die gleiche Messeinrichtung, das externe Messsystem und ggf. die Steuerungseinrichtung, um systematische Messfehler auszuschließen.

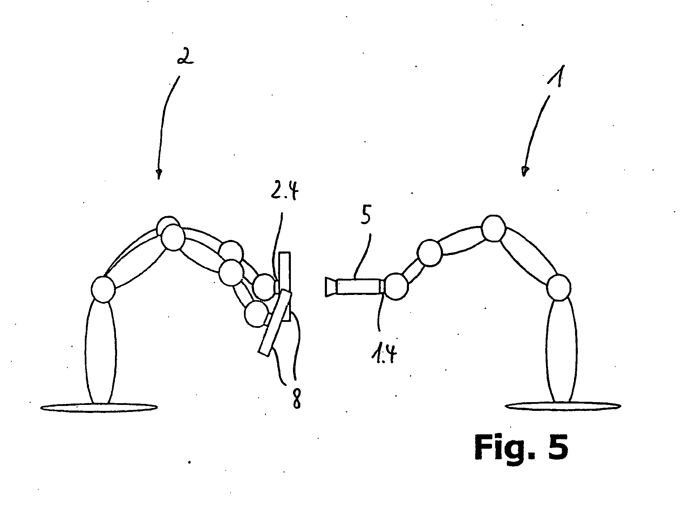

Dagegen zeigt die Fig. 5 eine weitere Verfahrensvariante, bei der die zu vermessenden Roboter 1, 2 (allgemein n Roboter; hier speziell n = 2) gemeinsam in ihrer tatsächlichen Arbeitszelle oder vom Hersteller in einer solchen Konstellation aufgestellt sind, in der sie auch später zusammen arbeiten sollen. Analog zu den im Folgenden beschriebenen weiteren Kopier-Verfahren für Genauigkeitseigenschaften bei zwei Robotern, kann eine Kette von n Robotern, die in einer Zelle oder Anlage nacheinander und aufeinander abgestimmt arbeiten (beispielsweise um ein "Fließband" zu emulieren), ebenfalls als Ganze aufeinander abgestimmt werden, wenn zunächst Roboter 2 auf Roboter 1, dann Roboter 3 auf Roboter 2 usw. abgestimmt wird.

Hierzu sind die zu vermessenden Roboter 1, 2, wie in der Fig. 5 dargestellt, eng miteinander gekoppelt, indem zum Bestimmen von Ist-Posen ein externes Messsystem 5 zum Einsatz kommt, das an zumindest einem Roboter angeordnet und zusammen mit diesem beweglich ist. Hierzu trägt gemäß der Fig. 5 der Referenzroboter 1 an seinem Handflansch 1.4 ein externes Messsystem 5, beispielsweise ein optisch messendes Messsystem, wie oben beispielsweise anhand der Fig. 3b beschrieben. Der Kopierroboter 2 hat an seinem Handflansch 2.4 wiederum eine Messplatte 8 montiert. Eine Steuerungsarchitektur der Roboter 1, 2 ist in der Fig. 5 aus Gründen der Übersichtlichkeit nicht gezeigt (vgl. hierzu Fig. 1, 2). Es ist nicht von Bedeutung, wo das Messsystem sitzt und welche Roboter- oder Messgeräte-Steuerung die Signale vom Messgerät auswertet. Bei einem optischen Verfahren ist es so, dass sich die Kamera an dem einem Roboter und die Messplatte an dem anderen Roboter befinden kann.

Das Grundprinzip des im Folgenden beschriebenen Verfahrens ist es, dass der Referenzroboter 1 eine Position oder Bahn vorgibt und der bzw. die Kopierroboter 2 unmittelbar folgen. Dabei wird die Folgeregelung so gestaltet, dass die Handflanschen 1.4, 2.4 der Roboter 1, 2 in einem gewünschten Winkel und Abstand zueinander stehen, wie im späteren Betrieb gefordert. Dies kann entweder an diskreten Positionen im Raum oder während einer gesamten abgefahrenen Roboterbahn der Fall sein. Die vorstehend skizzierte Messmethode besitzt den entscheidenden Vorteil, dass sämtliche Fehler, die durch verschiedene Roboterposen hervorgerufen werden können, durch das absolutgenaue Modell des Kopierroboters 2 kompensierbar sind. Auch können Werkzeuge (hier nicht gezeigt) an den Robotern in der Zelle angeflanscht bleiben, sofern zusätzliche Befestigungsmöglichkeiten für das externe Messsystem 5 geschaffen sind. Auf diese Weise lassen sich auch die Lastverhältnisse an den Robotern wie beim späteren realen Betrieb berücksichtigen, so dass die kooperierenden Roboter noch genauer aufeinander abstimmbar sind.

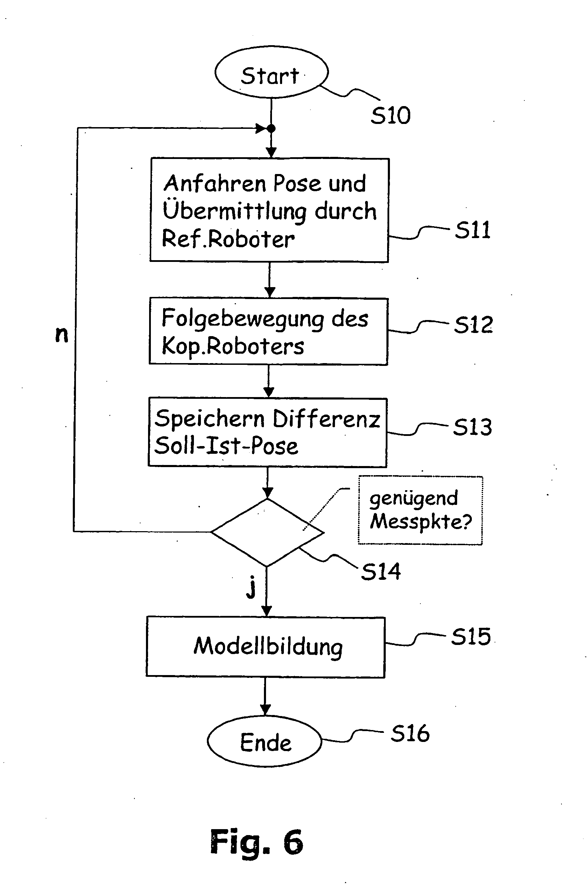

Der konkrete Ablauf des Verfahrens wird nachfolgend anhand des Ablaufdiagramms der Fig. 6 beschrieben, wobei ohne Beschränkung der Allgemeinheit von nur einem Kopierroboter gesprochen wird, obwohl gerade bei kooperierenden Robotern durchaus mehr als zwei Roboter gemeinsam an einer Aufgabe arbeiten. Bei der beschriebenen Ausgestaltung des erfindungsgemäßen Verfahrens läuft auf der Steuerungseinrichtung 4 des Kopierroboters 2 ein Servoing-Algorithmus, der basierend auf den vom Referenzroboter 1 gelieferten Messdaten M (Fig. 2) einen definierten Abstand und eine definierte Orientierung zum Referenzroboter 1 einhält. Dabei ist speziell bei einem Visual-Servoing-Algorithmus (Fig. 3b) das Ziel, definierte Merkmale 7.2, 8.2, beispielsweise auf einer Messplatte 7, 8 an dem Referenzroboter 1, an der gleichen Stelle eines Bildausschnitts B, B' zu halten. Bei einer mechanischen Kopplung über einen Kraft-Momenten-Sensor kann alternativ das Ziel bestehen, den Kopierroboter so zu positionieren, dass trotz der mechanischen Kopplung weder Kräfte noch Momente zwischen den Robotern übertragen werden. Gemäß der Fig. 6 beginnt das erfindungsgemäße Verfahren in Schritt S10, woraufhin der Referenzroboter 1 in Schritt S11 eine Pose innerhalb seines Arbeitsraumes anfährt und diese an den Kopierroboter 2 übermittelt. Die anzufahrende Pose kann, wie zuvor beschrieben, bei einem Vermessvorgang von einem Posengenerator (nicht gezeigt) vorgegeben werden oder sich aus Steuerungsprogrammen ableiten, welche die kooperierenden Roboter abzuarbeiten haben. Anschließend folgt in Schritt S12 der Kopierroboter 2 der Bewegung des Referenzroboters 1. Wenn keine mechanische Kopplung der Roboter 1, 2 vorliegt, kann dies zeitlich entkoppelt geschehen, d.h. zunächst fährt der Referenzroboter 1 in die gewünschte Position, anschließend der Kopierroboter 2. Bei einer geeigneten, von einer Bahnplanung unterstützbaren Folgeregelung kann der Kopierroboter 2 dem Referenzroboter 1 unmittelbar folgen. Bei einer mechanischen Kopplung hingegen ist ein direktes Folgen unabdingbar, um nicht das Messsystem oder die Roboter 1, 2 zu beschädigen. Der Kopierroboter 2 regelt seine Position in jedem Fall mit den vom Referenzroboter 1 gelieferten Messdaten und Bahninformationen dergestalt, dass der Kopierroboter 2 die zuvor definierte Pose relativ zum Referenzroboter 1 einnimmt. Die nunmehr vom Kopierroboter 2 eingenommene Pose (durchgezogene Linie in Fig. 5) wird im Allgemeinen nicht mit derjenigen Pose übereinstimmen, die er eingenommen hätte, wenn eine Bewegung zu der geplanten Stelle im Raum längs der ursprünglich geplanten Bahn erfolgt wäre. Die Differenz zwischen der geplanten Pose (punktierte Linie in Fig. 5) und der tatsächlich erreichten Pose (durchgezogene Linie) wird in Schritt S13 zusammen mit internen Stellungswerten (Winkelmesser) der Roboter 1, 2 gespeichert. Anschließend erfolgt in Schritt S14 eine Abfrage dahingehend, ob genügend Messpunkte angefahren wurden. Wird diese Abfrage bejaht (j), so wird das Verfahren mit Schritt S15 fortgesetzt. Anderenfalls (n) kehrt das Verfahren nach Schritt S11 zurück. In Schritt S15 erfolgt die Bestimmung des absolutgenauen Parameter-Modells für den Kopierroboter 2 aus den zuvor aufgenommenen Messdaten (siehe oben), vorzugsweise in der Modellbildungs-Einrichtung 4.3 in dessen Steuerungseinrichtung 4. Das vorstehend erläuterte Verfahren ist damit ebenso wie die zuvor anhand der Fig. 4 erläuterten alternativen Verfahren dazu geeignet, auch die Fehler des Referenz-Roboters 1 mit zu kompensieren.

Bei Verwendung der beschriebenen, erfindungsgemäßen Verfahren lässt sich eine Automatisierungsanlage mit preiswerten Standardrobotern aufbauen, wobei ein Bestimmen und Kopieren von Genauigkeitseigenschaften erst beim Austausch eines Roboters erfolgen muss. Dabei kann ohne weitere Einmessvorgänge oder Programmänderungen weiter produziert werden. Alternativ lässt sich vor Produktionsbeginn eine Datenbank aufbauen, in der Positionierungseigenschaften aller Roboter hinterlegt sind, so dass nach Bedarf die Kopier-Informationen schnell und einfach entnommen werden können.

Durch das beschriebene Kopieren von Genauigkeitseigenschaften lassen sich speziell kooperierende Roboter sehr genau aufeinander abstimmen, da nicht jeder lediglich begrenzt absolutgenau ausgebildet ist, sondern vielmehr alle Roboter genau die gleichen Positionierungs- und Bahnfahreigenschaften besitzen.

## Patentansprüche

1. Verfahren zum Steuern einer Mehrzahl von Handhabungsgeräten (1, 2), wie Mehrachs-Industrierobotern, wobei:
a) ein Handhabungsgerät (1) in eine Anzahl vorgegebener Posen innerhalb seines Arbeitsraums und zum Bestimmen interner Stellungswerte des Handhabungsgeräts in denselben als erste Soll-Posen (P2) bewegt wird;
**dadurch gekennzeichnet, dass**
wenigstens eines der Handhabungsgeräte als Referenz-Handhabungsgerät (1) und wenigstens ein anderes als Kopier-Handhabungsgerät (2) fungiert, wobei a) durch das Referenz-Handhabungsgerät (1) ausgeführt wird;
b) für jede Soll-Pose (P2) aus Schritt a) eine zugeordnete Pose des Referenz-Handhabungsgeräts als erste Ist-Pose (P1) durch ein externes Messsystem (5) bestimmt wird;
c) von für das Referenz-Handhabungsgerät bestimmte Posen als zweite Soll-Posen (P2') durch das Kopier-Handhabungsgerät angefahren werden;
d) für jede in Schritt c) angefahrene Pose eine Pose des Kopier-Handhabungsgeräts als zweite Ist-Pose (P1') durch ein externes Messsystem (6) bestimmt wird; und
e) ein Parameter-Modell für das Kopier-Handhabungsgerät aus Ist-Soll-Abweichungen zwischen den ersten Soll- und Ist-Posen und aus Ist-Soll-Abweichungen zwischen den zweiten Soll- und Ist-Posen zum simultanen Kompensieren sowohl von Fehlern des Kopier-Handhabungsgeräts (2) als auch von Fehlern des Referenz-Handhabungsgeräts (1) ermittelt wird.

2. Verfahren zum Steuern einer Mehrzahl von Handhabungsgeräten (1, 2), wie Mehrachs-Industrierobotern, wobei:
a) ein Handhabungsgerät (1) in eine Anzahl vorgegebener Posen innerhalb seines Arbeitsraums und zum Bestimmen interner Stellungswerte des Handhabungsgeräts in denselben als erste Soll-Posen bewegt wird;
**dadurch gekennzeichnet, dass**
b) wenigstens eines der Handhabungsgeräte als Referenz-Handhabungsgerät (1) und wenigstens ein anderes als Kopier-Handhabungsgerät (2) fungiert, wobei a) durch das Referenz-Handhabungsgerät (1) ausgeführt wird;
c) wobei das Referenz-Handhabungsgerät (1) ein externes Messsystem (5) trägt, so dass letzteres von dem Referenz-Handhabungsgerät (1) mitbewegt wird;
d) für jede in Schritt a) angefahrene erste Soll-Pose des Referenz-Handhabungsgeräts (1) eine zweite Soll-Pose durch das Kopier-Handhabungsgerät (2) angefahren wird;
e) für jede in Schritt d) angefahrene zweite Soll-Pose Messdaten durch das externe Messsystem (5) bestimmt werden und die Position des Kopier-Handhabungsgeräts (2) dergestalt geregelt wird, dass eine zuvor definierte Pose relativ zum Referenz-Handhabungsgerät (1) eingenommen wird;
f) die Differenz zwischen der geplanten zweiten Soll-Pose und der tatsächlich erreichten Ist-Pose des Kopier-Handhabungsgeräts (2) zusammen mit internen Stellungswerten der Roboter (1, 2) gespeichert wird;
g) ein Parameter-Modell für das Kopier-Handhabungsgerät (2) aus den aufgenommenen Messdaten zum simultanen Kompensieren sowohl von Fehlern des Kopier-Handhabungsgeräts (2) als auch von Fehlern des Referenz-Handhabungsgeräts (1) ermittelt wird.

3. Verfahren nach Anspruch 1, **dadurch gekennzeichnet, dass** durch das Kopier-Handhabungsgerät die vorgegebenen ersten Soll-Posen des Referenz-Handhabungsgeräts angefahren werden.

4. Verfahren nach Anspruch 1, **dadurch gekennzeichnet, dass** durch das Kopier-Handhabungsgerät die bestimmten ersten Ist-Posen des Referenz-Handhabungsgeräts angefahren werden.

5. Verfahren nach Anspruch 4, **dadurch gekennzeichnet, dass** das Kopier-Handhabungsgerät so lange verfahren wird, bis eine Pose desselben und die Ist-Pose des Referenz-Handhabungsgeräts im Rahmen vorgegebener Abweichungstoleranzen und/oder eines vorgegebenen Versatzes übereinstimmen.

6. Verfahren nach Anspruch 5, **dadurch gekennzeichnet, dass** das Verfahren des Kopier-Handhabungsgeräts nach Maßgabe des externen Messsystems erfolgt.

7. Verfahren nach einem der Ansprüche 1 bis 6, **dadurch gekennzeichnet, dass** der Betrieb des Referenz-Handhabungsgeräts und des Kopier-Handhabungsgeräts im Wesentlichen gleichzeitig erfolgt, wobei dem Kopier-Handhabungsgerät die Soll- und/oder Ist-Pose des Referenz-Handhabungsgeräts über eine geeignet ausgebildete Verbindung, insbesondere eine Datenverbindung, übermittelt werden.

8. Verfahren nach einem der Ansprüche 1 bis 7, **dadurch gekennzeichnet, dass** die Posenbestimmung durch das externe Messsystem optisch erfolgt.

9. Verfahren nach einem der Ansprüche 1 bis 8, **dadurch gekennzeichnet, dass** das Referenz-Handhabungsgerät und das Kopier-Handhabungsgerät in einer gemeinsamen Arbeitszelle betrieben werden.

10. Verfahren nach einem der Ansprüche 1, 3 bis 8, **dadurch gekennzeichnet, dass** das Kopier-Handhabungsgerät in einer mit einer Arbeitszelle des Referenz-Handhabungsgeräts identischen, weiteren Arbeitszelle betrieben wird.

11. Verfahren nach einem der Ansprüche 1 bis 10, **dadurch gekennzeichnet, dass** die ersten Soll- und Ist-Posen des Referenz-Handhabungsgeräts nach ihrer Bestimmung gespeichert werden.

12. Verfahren nach Anspruch 11 in Verbindung mit einem der Ansprüche 1 bis 6 oder 8 bis 10, **dadurch gekennzeichnet, dass** das Referenz-Handhabungsgerät und das Kopier-Handhabungsgerät zeitlich versetzt betrieben werden, wobei dem Kopier-Handhabungsgerät die Soll- und/oder Ist-Posen des Referenz-Handhabungsgeräts in gespeicherter Form übermittelt werden.

13. Verfahren nach Anspruch 11 oder 12 in Verbindung mit einem der Ansprüche 1 bis 9, **dadurch gekennzeichnet, dass** das Referenz-Handhabungsgerät und das Kopier-Handhabungsgerät nacheinander in einer Arbeitszelle an derselben Steuerungseinrichtung betrieben werden.

14. Verfahren nach einem der vorangehenden Ansprüche, **dadurch gekennzeichnet, dass** zunächst ein erstes Handhabungsgerät als Referenz-Handhabungsgerät und ein zweites Handhabungsgerät als Kopier-Handhabungsgerät ausgewählt wird, dass anschließend das zweite Handhabungsgerät als Referenz-Handhabungsgerät und ein weiteres Handhabungsgerät als Kopier-Handhabungsgerät fungiert usw.

15. Vorrichtung eingerichtet zum Verbessern von Genauigkeitseigenschaften von Handhabungsgeräten (1, 2), wie Mehrachs-Industrierobotern, **gekennzeichnet durch**
- wenigstens einen Referenzroboter (1) und einen Kopierroboter (2);
- wenigstens eine Steuereinrichtung (3, 4) eingerichtet zum Bewegen der Handhabungsgeräte (1, 2) in vorbestimmte Soll-Posen (P2, P2');
- wenigstens ein externes Messsystem (5, 5') eingerichtet zum Bestimmen von den jeweiligen Soll-Posen (P2, P2') entsprechenden Ist-Posen (P1, P1') der Handhabungsgeräte (1, 2);
- eine Vergleichseinrichtung (3.2) eingerichtet zum Bestimmen einer Abweichung (A) zwischen den jeweiligen Soll-Posen (P2, P2') und Ist-Posen (P1, P1') eines Handhabungsgeräts (1, 2); und
- eine Modellbildungs-Einrichtung (3.3) eingerichtet zum Ermitteln eines Parameter-Modells des Kopierroboters (2) aus sowohl Ist-Soll-Abweichungen (Δ) zwischen den Soll- und Ist-Posen (P1, P2) des Referenzroboters (1) als auch Ist-Soll-Abweichungen zwischen den Posen (P1', P2') des Kopierroboters (2).

16. Vorrichtung nach Anspruch 15, **dadurch gekennzeichnet, dass** wenigstens ein externes Messsystem (5, 6) statio-när und in Wirkverbindung mit einem Arbeitsbereich (AZ1, AZ2, AZ3) eines Handhabungsgeräts (1, 2) angeordnet ist.

17. Vorrichtung eingerichtet zum Verbessern von Genauigkeitseigenschaften von Handhabungsgeräten (1, 2), wie Mehrachs-Industrierobotern, **gekennzeichnet durch**
- wenigstens ein Referenz-Handhabungsgerät (1) und ein Kopier-Handhabungsgerät (2);
- wenigstens eine Steuereinrichtung (3, 4) eingerichtet zum Bewegen der Handhabungsgeräte (1, 2) in vorbestimmte Soll-Posen ;
- wenigstens ein externes Messsystem (5), das an einem Handhabungsgerät (1,2) und mit diesem beweglich angeordnet ist;
-- wobei das wenigstens eine externe Messsystem (5) zum Bestimmen für jede angefahrene Soll-Pose der Handhabungsgeräte (1, 2) Messdaten eingerichtet ist;
- einen Servoalgorithmus eingerichtet zum Regeln der Position des Kopier-Handhabungsgeräts (2), so dass eine zuvor definierte Pose relativ zum Referenz-Handhabungsgerät (1) eingenommen wird;
- eine Vergleichseinrichtung (3.2) eingerichtet zum Bestimmen der Differenz zwischen der geplanten Soll-Pose und der tatsächlich erreichten Ist-Pose des Kopier-Handhabungsgeräts (2);
- eine Modellbildungs-Einrichtung (3.3) eingerichtet zum Ermitteln eines Parameter-Modells für das Kopier-Handhabungsgerät (2) aus den aufgenommenen Messdaten zusammen mit internen Stellungswerten der Roboter (1, 2) zum simultanen Kompensieren sowohl von Fehlern des Kopier-Handhabungsgeräts (2) als auch von Fehlern des Referenz-Handhabungsgeräts (1).

18. Vorrichtung nach einem der Ansprüche 15 bis 17, **dadurch gekennzeichnet, dass** ein externes Messsystem (5, 6) als optisch messendes Messsystem ausgebildet ist.

19. Vorrichtung nach Anspruch 18 in Verbindung mit einem der Ansprüche 15 oder 16, **dadurch gekennzeichnet, dass** das optische Messsystem (5, 6) zum Bestimmen sämtlicher Freiheitsgrade einer Pose (P1, P1') der Handhabungsgeräte (1, 2) ausgebildet ist.

20. Vorrichtung nach Anspruch 18 oder 19, **dadurch gekennzeichnet, dass** das externe Messsystem (5, 6) ein Stereo-Bildverarbeitungssystem ist.

21. Vorrichtung nach einem der Ansprüche 15 bis 20, **gekennzeichnet durch** eine gemeinsame Arbeitszelle (AZ1)eingerichtet zum gleichzeitigen Betreiben von wenigstens zwei Handhabungsgeräten (1, 2).

22. Vorrichtung nach einem der Ansprüche 15, 16, 18 bis 21 in Verbindung mit einem der Ansprüche 15 oder 16, **gekennzeichnet durch** getrennte Arbeitszellen (AZ2, AZ3) für eine Anzahl von Handhabungsgeräten (1, 2).

23. Vorrichtung nach einem der Ansprüche 15 bis 22, **gekennzeichnet durch** Übertragungsmittel (T) eingerichtet zur Datenübertragung zwischen Handhabungsgeräten, insbesondere zum Übertragen von Soll- (P2, P2') und/oder Ist-Posen (P1, P1') sowie internen Stellungswerten.

24. Vorrichtung nach einem der Ansprüche 15 bis 23, **gekennzeichnet durch** Speichermittel (3.1) eingerichtet zum Speichern zumindest von Soll- (P2, P2') und/oder Ist-Posen (P1, P1') eines Handhabungsgeräts (1, 2).

25. Vorrichtung nach Anspruch 24, **gekennzeichnet durch** eine Arbeitszelle (AZ2, AZ3) eingerichtet zum sequentiellen Betreiben der Handhabungsgeräte (1, 2), insbesondere an derselben Steuereinrichtung (3, 4).

## Claims

1. A method of controlling a plurality of manipulators (1, 2), such as multiaxial industrial robots, in which:
a) a manipulator (1) is moved into a number of preset poses within its working space and for determining internal position values of the manipulator in the same as first desired poses (P2);
**characterised in that**
at least one of the manipulators functions as a reference manipulator (1) and at least one other functions as a copying manipulator (2), a) being performed by the reference manipulator (1);
b) for each desired pose (P2) from step a) an associated pose of the reference manipulator is determined as a first actual pose (P1) by an external measuring system (5);
c) poses determined for the reference manipulator are assumed by the copying manipulator as second desired poses (P2');
d) for each pose assumed in step c) a pose of the copying manipulator is determined as a second actual pose (P1') by an external measuring system (6) ; and
e) a parameter model for the copying manipulator is determined from actual/desired deviations between the first desired and actual poses and from actual/desired deviations between the second desired and actual poses for simultaneous compensation both of errors of the copying manipulator (2) and also of errors of the reference manipulator (1).

2. A method of controlling a plurality of manipulators (1,2), such as multiaxial industrial robots, in which:
a) a manipulator (1) is moved into a number of preset poses within its working space and for determining internal position values of the manipulator in the same as first desired poses;
**characterised in that**
b) at least one of the manipulators functions as a reference manipulator (1) and at least one other functions as a copying manipulator (2), a) being performed by the reference manipulator (1);
c) the reference manipulator (1) bearing an external measuring system (5), such that the latter is moved together with the reference manipulator (1) ;
d) for each first desired pose of the reference manipulator (1) assumed in step a) a second desired pose is assumed by the copying manipulator (2);
e) for each second desired pose assumed in step d) measured data are determined by the external measuring system (5), and the position of the copying manipulator (2) is controlled in such a way that a predefined pose is adopted relative to the reference manipulator (1);
f) the difference between the planned second desired pose and the actually achieved actual pose of the copying manipulator (2) is stored together with internal position values of the robots (1, 2);
g) a parameter model for the copying manipulator (2) is determined from the recorded measured data for simultaneous compensation both of errors of the copying manipulator (2) and also of errors of the reference manipulator (1).

3. A method according to claim 1, **characterised in that** the preset first desired poses of the reference manipulator are assumed by the copying manipulator.

4. A method according to claim 1, **characterised in that** the determined first actual poses of the reference manipulator are assumed by the copying manipulator.

5. A method according to claim 4, **characterised in that** the copying manipulator is displaced until a pose thereof and the actual pose of the reference manipulator coincide within the bounds of preset deviation tolerances and/or a preset mismatch.

6. A method according to claim 5, **characterised in that** displacement of the copying manipulator proceeds in accordance with the external measuring system.

7. A method according to any one of claims 1 to 6, **characterised in that** operation of the reference manipulator and of the copying manipulator proceeds substantially simultaneously, the desired and/or actual pose of the reference manipulator being transmitted to the copying manipulator via a suitably designed connection, in particular a data link.

8. A method according to any one of claims 1 to 7, **characterised in that** pose determination by the external measuring system proceeds optically.

9. A method according to any one of claims 1 to 8, **characterised in that** the reference manipulator and the copying manipulator are operated in a common working cell.

10. A method according to any one of claims 1, 3 to 8, **characterised in that** the copying manipulator is operated in an additional working cell identical to a working cell of the reference manipulator.

11. A method according to any one of claims 1 to 10, **characterised in that** the first desired and actual poses of the reference manipulator are stored after being determined.

12. A method according to claim 11 in conjunction with any one of claims 1 to 6 or 8 to 10, **characterised in that** the reference manipulator and the copying manipulator are operated with a time offset, the desired and/or actual poses of the reference manipulator being transmitted to the copying manipulator in stored form.

13. A method according to claim 11 or claim 12, in conjunction with any one of claims 1 to 9, **characterised in that** the reference manipulator and the copying manipulator are operated one after the other in a working cell using the same control device.

14. A method according to any one of the preceding claims, **characterised in that** first of all a first manipulator is selected as reference manipulator and a second manipulator is selected as copying manipulator, and **in that** then the second manipulator functions as reference manipulator and a further manipulator as copying manipulator and so on.

15. A device set up for improving accuracy characteristics of manipulators (1, 2), such as multiaxial industrial robots, **characterised by**
- at least one reference robot (1) and one copying robot (2);
- at least one control device (3, 4) set up to move the manipulators (1, 2) into preset desired poses (P2, P2');
- at least one external measuring system (5, 5') set up to determine actual poses (P1, P1') of the manipulators (1, 2) corresponding to the respective desired poses (P2, P2');
- a comparison device (3.2) set up to determine a deviation (Δ) between the respective desired poses (P2, P2') and actual poses (P1, P1') of a manipulator (1, 2); and
- a modelling device (3.3) set up to determine a parameter model for the copying robot (2) from both actual/desired deviations (Δ) between the desired and actual poses (P1, P2) of the reference robot (1) and actual/desired deviations between the poses (P1', P2') of the copying robot (2).

16. A device according to claim 15, **characterised in that** at least one external measuring system (5, 6) is arranged stationarily and in active connection with a working area (AZ1, AZ2, AZ3) of a manipulator (1, 2).

17. A device set up to improve accuracy characteristics of manipulators (1, 2), such as multiaxial industrial robots, **characterised by**
- at least one reference manipulator (1) and one copying manipulator (2);
- at least one control device (3,4) set up to move the manipulators (1, 2) into preset desired poses;
- at least one external measuring system (5), which is arranged on a manipulator (1, 2) so as to be movable therewith;
- the at least one external measuring system (5) being set up to determine measured data for each assumed desired pose of the manipulators (1, 2);
- a servoing algorithm set up to control the position of the copying manipulator (2), such that a predefined pose is adopted relative to the reference manipulator (1);
- a comparison device (3.2) set up to determine the difference between the planned desired pose and the actually achieved actual pose of the copying manipulator (2);
- a modelling device (3.3) set up to determine a parameter model for the copying manipulator (2) from the recorded measured data together with internal position values of the robots (1, 2) for simultaneous compensation both of errors of the copying manipulator (2) and also of errors of the reference manipulator (1).

18. A device according to any one of claims 15 to 17, **characterised in that** an external measuring system (5, 6) takes the form of an optically measuring measuring system.

19. A device according to claim 18 in conjunction with either one of claims 15 or 16, **characterised in that** the optical measuring system (5, 6) is designed to determine all the degrees of freedom of a pose (P1, P1') of the manipulators (1, 2).

20. A device according to claim 18 or claim 19, **characterised in that** the external measuring system (5, 6) is a stereo image processing system.

21. A device according to any one of claims 15 to 20, **characterised by** a common working cell (AZ1) set up for simultaneous operation of at least two manipulators (1, 2).

22. A device according to any one of claims 15, 16, 18 to 21 in conjunction with either one of claims 15 or 16, **characterised by** separate working cells (AZ2, AZ3) for a number of manipulators (1, 2).

23. A device according to any one of claims 15 to 22, **characterised by** transmission means (T) set up for data transmission between manipulators, in particular for the transmission of desired (P2, P2') and/or actual (P1, P1') poses and internal position values.

24. A device according to any one of claims 15 to 23, **characterised by** memory means (3.1) set up to store desired (P2, P2') and/or actual (P1, P1') poses of a manipulator (1, 2).

25. A device according to claim 24, **characterised by** a working cell (AZ2, AZ3) set up for sequential operation of the manipulators (1, 2), in particular using the same control device (3, 4).

## Revendications

1. Procédé pour commander plusieurs manipulateurs (1, 2), tels des robots industriels à axes multiples, dans lequel :
a) un manipulateur (1) est mû vers un certain nombre de poses prédéfinies au sein de son espace de travail et pour déterminer des valeurs internes de position du manipulateur dans ledit espace de travail comme premières poses consignes (P2) ;
**caractérisé en ce que**
au moins un des manipulateurs fonctionne comme manipulateur référent (1) et au moins un autre comme manipulateur copieur (2), a) étant exécutée par le manipulateur référent (1);
b) pour chaque pose consigne (P2) de l'étape a) une pose du manipulateur référent attribuée est déterminée comme première pose réelle (P1) par un système de mesures (5) externe ;
c) des poses définies pour le manipulateur référent sont desservies comme deuxièmes poses consignes (P2') par le manipulateur copieur ;
d) pour chaque pose desservie à l'étape c), une pose du manipulateur copieur est déterminée comme deuxième pose réelle (P1') par un système de mesures externe (6) ; et
e) un modèle de paramètres est déterminé pour le manipulateur copieur à partir des écarts entre valeurs réelle et consigne des premières poses consignes et réelles et à partir des écarts entre valeurs réelle et consigne des deuxièmes poses consignes et réelles afin de compenser simultanément tant les erreurs du manipulateur copieur (2) que les erreurs du manipulateur référent (1).

2. Procédé pour commander plusieurs manipulateurs (1, 2), tels des robots industriels à axes multiples, dans lequel :
a) un manipulateur (1) est mû vers un certain nombre de poses prédéfinies au sein de son espace de travail et pour déterminer des valeurs internes de position du manipulateur dans ledit espace de travail comme premières poses consignes ;
**caractérisé en ce que**
b) au moins un des manipulateurs fasse fonction de manipulateur référent (1) et au moins un autre de manipulateur copieur (2), a) étant exécutée par le manipulateur référent (1) ;
c) le manipulateur référent (1) porte un système de mesures (5) externe, de sorte que ce dernier est emporté par le manipulateur référent (1) ;
d) pour chaque première pose consigne desservie dans l'étape a) par le manipulateur référent (1) une deuxième pose consigne est desservie par le manipulateur copieur (2) ;
e) pour chaque deuxième pose consigne desservie dans l'étape d), des mesures sont déterminées par le système de mesures externe (5) et la position du manipulateur copieur (2) est régulée de telle sorte qu'une pose précédemment définie est prise relativement au manipulateur référent (1) ;
f) la différence entre la deuxième pose consigne prévue et la pose réelle effectivement atteinte par le manipulateur copieur (2) est enregistrée en mémoire conjointement avec les valeurs de position internes des robots (1, 2) ;
g) un modèle de paramètres est déterminé pour le manipulateur copieur (2) à partir des mesures acquises afin de compenser simultanément tant les erreurs du manipulateur copieur (2) que les erreurs du manipulateur référent (1).

3. Procédé selon la revendication 1, **caractérisé en ce que** les premières poses consignes définies du manipulateur référent sont desservies par le manipulateur copieur.

4. Procédé selon la revendication 1, **caractérisé en ce que** les premières poses réelles déterminées du manipulateur référent sont desservies par le manipulateur copieur.

5. Procédé selon la revendication 4, **caractérisé en ce que** le manipulateur copieur est déplacé jusqu'à ce qu'une de ses poses et la pose réelle du manipulateur référent coïncident dans le cadre des tolérances d'écart prescrites et/ou d'un décalage prescrit.

6. Procédé selon la revendication 5, **caractérisé en ce que** le déplacement du manipulateur copieur a lieu suivant les cotes du système de mesures externe.

7. Procédé selon une des revendications 1 à 6, **caractérisé en ce que** le fonctionnement du manipulateur référent et du manipulateur copieur a lieu essentiellement en même temps, la pose consigne et/ou réelle du manipulateur référent étant transmise au manipulateur copieur via une liaison formée de manière appropriée, singulièrement une liaison de données.

8. Procédé selon une des revendications 1 à 7, **caractérisé en ce que** la détermination des poses a lieu de manière optique par le système de mesures externe.

9. Procédé selon une des revendications 1 à 8, **caractérisé en ce que** le manipulateur référent et le manipulateur copieur fonctionnent dans une cellule de travail commune.

10. Procédé selon une des revendications 1, 3 à 8, **caractérisé en ce que** le manipulateur copieur fonctionne dans une autre cellule de travail identique à la cellule de travail du manipulateur référent.

11. Procédé selon une des revendications 1 à 10, **caractérisé en ce que** les premières poses consignes et réelles du manipulateur référent sont enregistrées après leur détermination.

12. Procédé selon la revendication 11 en relation avec une des revendications 1 à 6 ou 8 à 10, **caractérisé en ce que** le manipulateur référent et le manipulateur copieur fonctionnent de manière différée, la pose consigne et/ou réelle du manipulateur référent étant transmise au manipulateur copieur sous une forme enregistrée.

13. Procédé selon une des revendications 11 ou 12 en relation avec une des revendications 1 à 9, **caractérisé en ce que** le manipulateur référent et le manipulateur copieur fonctionnent l'un après l'autre dans une cellule de travail sur le même dispositif de commande.

14. Procédé selon une des revendications qui précèdent, **caractérisé en ce que** d'abord un premier manipulateur est désigné comme manipulateur référent et un deuxième manipulateur est désigné comme manipulateur copieur, et qu'ensuite le deuxième manipulateur fasse fonction de manipulateur référent et un autre manipulateur de manipulateur copieur etc.

15. Dispositif élaboré pour améliorer les propriétés de précision des manipulateurs (1, 2), tels des robots industriels à axes multiples, **caractérisé par**
- au moins un robot référent (1) et un robot copieur (2) ;
- au moins un dispositif de commande (3, 4) élaboré pour mouvoir des manipulateurs (1, 2) vers des poses consignes (P2, P2') prédéfinies ;
- au moins un système de mesures externe (5, 5') élaboré pour déterminer à partir des différentes poses consignes (P2, P2') des poses réelles correspondantes (P1, P1') des manipulateurs (1, 2) ;
- un dispositif comparateur (3.2) élaboré pour déterminer un écart (Δ) entre les différentes poses consignes (P2, P2') et poses réelles (P1, P1') d'un manipulateur (1, 2) ; et
- un dispositif de formation de modèles (3.3) élaboré pour déterminer un modèle de paramètres du robot copieur (2) tant à partir des écarts entre les valeurs réelle et consigne (Δ) des poses consigne et réelle (P1, P2) du robot référent (1) qu'à partir des écarts entre les valeurs réelle et consigne des poses (P1', P2') du robot copieur (2).

16. Dispositif selon la revendication 15, **caractérisé par** au moins un système de mesure externe (5, 6) disposé de manière stationnaire et pour agir conjointement avec la zone de travail (AZ1, AZ2, AZ3) d'un manipulateur (1, 2).

17. Dispositif élaboré pour améliorer les propriétés de précision des manipulateurs (1, 2), tels des robots industriels à axes multiples, **caractérisé par**
au moins un robot référent (1) et un robot copieur (2) ;
- au moins un dispositif de commande (3, 4) élaboré pour mouvoir des manipulateurs (1, 2) vers des poses consignes prédéfinies ;
- au moins un système de mesures (5) externe disposé contre un manipulateur (1,2) et mû avec ce dernier;
- au moins ce système de mesures (5) externe étant élaboré pour déterminer des mesures pour chaque pose consigne desservie des manipulateurs (1,2) ;
- un servo-algorithme élaboré pour réguler à partir de la position du manipulateur copieur (2), de sorte qu'une pose précédemment définie est prise relativement au manipulateur référent (1) ;
- un dispositif comparateur (3.2) élaboré pour déterminer la différence entre la pose consigne prévue et la pose réelle effectivement atteinte par le manipulateur copieur (2) ;
- un dispositif de formation de modèles (3.3) élaboré pour déterminer un modèle de paramètres pour le manipulateur copieur (2) à partir des mesures acquises conjointement avec des valeurs de position internes des robots (1, 2) afin de compenser simultanément tant les erreurs du manipulateur copieur (2) que les erreurs du manipulateur référent (1).

18. Dispositif selon une des revendications 15 à 17, **caractérisé en ce qu'**un système de mesures externe (5, 6) est réalisé comme système de mesure optique.

19. Dispositif selon la revendication 18 en relation avec une des revendications 15 ou 16, **caractérisé en ce que** le système de mesure optique (5, 6) est réalisé pour déterminer tous les degrés de liberté d'une pose (P1, P1') des manipulateurs (1, 2).

20. Dispositif selon la revendication 18 ou 19, **caractérisé en ce que** le système de mesures externe (5, 6) est un système stéréo de traitement d'images.

21. Dispositif selon une des revendications 15 à 20, **caractérisé par** une cellule de travail commune (AZ1) élaborée pour faire fonctionner simultanément au moins deux manipulateurs (1, 2).

22. Dispositif selon une des revendications 15, 16, 18 à 21 en relation avec une des revendications 15 ou 16, **caractérisé par** des cellules de travail séparées (AZ2, AZ3) pour un certain nombre de manipulateurs (1, 2).

23. Dispositif selon une des revendications 15 à 22, **caractérisé par** des moyens de transmission (T) élaborés pour transmettre des données entre les manipulateurs, et notamment pour transmettre les poses consignes (P2, P2') et/ou réelles (P1, P1') ainsi que les valeurs de position internes.

24. Dispositif selon une des revendications 15 à 23, **caractérisé par** des mémoires (3.1) élaborées pour enregistrer au moins les poses consignes (P2, P2') et/ou réelles (P1, P1') d'un manipulateur (1, 2).

25. Dispositif selon la revendication 24, **caractérisé par** une cellule de travail (AZ2, AZ3) élaborée pour faire fonctionner de manière séquentielle des manipulateurs (1, 2), notamment sur le même dispositif de commande (3, 4)
